# EUROPEAN PATENT SPECIFICATION

(11) **EP 1 449 172 B1**
(45) Date of publication and mention of the grant of the patent: **10.12.2008**
(21) Application number: 01994748.0
(22) Date of filing: 28.11.2001
(51) Int. Cl.: G06T 11/60

(54) **METHOD FOR GENERATING GRAPHIC REPRESENTATION IN A MOBILE TERMINAL**
VERFAHREN ZUR ERZEUGUNG EINER GRAPHISCHEN BILDDARSTELLUNG IN EINEM MOBILEN ENDGERÄT
PROCEDE DE GENERATION D'UNE REPRESENTATION GRAPHIQUE DANS UN TERMINAL MOBILE

(43) Date of publication of application: 25.08.2004
(73) Proprietor: Nokia Corporation, 02150 Espoo (FI)
(72) Inventor: THEIMER, Wolfgang, 44879 Bochum (DE); HABERLAND-SCHLÖSSER, Knut, 44809 Bochum (DE); ZILLIKENS, Frank, 33615 Bielefeld (DE); KLAMMER, Wolfgang, 44581 Castrop-Rauxel (DE); LEHN, Karsten, 59174 Kamen (DE); PAZINA, Marcus, 44789 Bochum (DE)
(74) Representative: Becker Kurig Straus
(86) International application number: PCT/EP2001/013896
(87) International publication number: WO 2003/046834

(56) References cited:
- EP-A- 0 584 759
- EP-A- 0 686 949
- GB-A- 2 343 586

## Description

The invention relates to the generation of graphics which may be a part of a messaging between mobile communication terminals. Particularly, the invention relates to a method of generating of a compound graphic comprising a plurality of illustrating graphical elements, wherein the illustrating graphical elements can be selected by the user to enable the user to generate an individual compound graphic. Therefore, the illustrating graphical elements are stored in a graphical element library.

Mobile communication terminals, like mobile phones, offer the possibility to transmit messages between them. The usage of messages grew rapidly over the last years. The global system for mobile communications (GSM) standard for mobile communication defines a messaging service known as short message service (SMS). Further standards for mobile communication define related services. Formerly, only text messages based on the short message service (SMS) were available. The standard definition of the text messages was enhanced in order to provide transmission of also graphical illustrations. These graphical illustrations may be included in the text messages or appended to the text messages. Modem mobile phones enable this enhancing feature and allow to transmit graphics as a part of the messaging between communication terminals.

Up to now, graphics to be integrated, included or appended to messages are stored within a graphic library included in the mobile terminal. Usually, these graphics are pre-defined and not be modifiable since the input means of mobile terminal devices are strongly limited, e.g. mobile phones normally provide an ITU-T (international telecommunication union - telephone) keypad. It is obviously, that such an ITU-T keypad is not useful for designing new graphics. Of course, graphic editors which are pixel orientated are available for mobile terminal devices but such graphic editors lack of acceptable deployment.

EP 0 686 949 is a typical representative of the prior art. EP 0 686 949 relates to a pager with an image display. The pager stores a plurality of images. Each stored image is associated with a corresponding image designation code, which is represented by a number sequence. A message acquired by the pager from a base station upon signalization by the base station may comprise such an image designation code. Upon reception of such a message containing an image designation code, the stored image associated with the code is selected and the text part of the message is finally displayed together with the selected image. In this approach, a user who wants to make use of the image display function is limited to the pre-stored selection of images and the user is required to remember the image designation codes. The image designation code may comprise a sequence of pattern codes, each being associated with a corresponding pre-stored pattern. Several patterns are composed to compose a portrait image.

EP 0 584 759 is a further typical representative of the prior art. EP 0 584 759 relates to an image displaying apparatus such as a processing device with graphic display. The displaying apparatus stores a plurality of image data of parts, which are representative of elements of a portrait such as eyes, eyebrows, a nose, hair, an outline of a face, and so on and has a portrait editor, which is for instance activated upon user selection of a specific portrait key. In the composing modes, up/down keys function as part designating keys for designating a part such as a right eye, a left eye, a nose, a mouth, a right eyebrow and a left eyebrow and left/right keys function as pattern selecting keys for selecting a part pattern of the part designated by the up/down key. Upon selection of a shift key, a patter selected by the means of the up/down and left/right keys is moved on the composite portrait. Hence, the portrait parts are arranged in a two-dimensional table, within which the user is enabled to select the desired one by the means of the up/down and left/right keys. This approach requires the use of several input keys, which are typically not available when using an ITU-T keypad.

Therefore, new graphics are normally generated on an external device like a personal computer (PC) and transmitted via special dedicated services to mobile phones where these graphics may be stored for further usage. This method is not flexible enough for users which wish to include individual graphics to their messages.

A smart method for generating compound graphics may be provided advantageously to especially users of mobile terminals of limited inputting components to enable the users to design individual graphics in a fast and appropriate way.

An object of the invention is to provide a method for generating compound graphics. These compound graphics consist of illustrating graphical elements which can be selected and arranged by a user in an easy and fast way.

A further object of the invention is to provide a mobile terminal which allows a user to operate an embodiment of the method for generating compound graphics according to the present invention.

The objects of the present invention are solved by the accompanying independent claims 1, 13 and 14, which define the invention. Embodiments of the present invention are the subject of dependent claims.

According to an embodiment of the present invention a method for generating a compound graphic is provided. The compound graphic comprises a plurality of illustrating graphical elements. The illustrating graphical elements are stored in a graphical element library. In a first step of the method an initial compound graphic is displayed. The initial compound graphic comprises selected or pre-selected illustrating graphical elements. In a following step a modification request is received from a user. The user selects one of certain keys fo a keypad. Each key initiates a corresponding modification request. The modification request comprises also a designation of an illustrating graphical element of the compound graphic and hence, defines the modification thereof. The modification is performed according to the modification request. Thereafter, the resulting modified compound graphic containing said amended or updated or modified element is displayed. The selected or pre-selected graphical elements of the initial compound graphic may be retrieved from a library or may be produced from scratch.

It may be noted that the method according to an embodiment of the present invention may be implemented in a graphic editor. The graphic editor may be a function or a feature of a mobile terminal. Preferably, the mobile terminal may be a mobile communication terminal and the graphic generated by the graphic editor may be appended or included in a text message. The text message may be communicated between mobile communication terminals via a mobile communication network, like global system for mobile communication (GSM), universal mobile telecommunication system (UMTS) and the like. The composing of a compound graphic consisting of a plurality of illustrating graphical elements may be preferably used in combination with terminals having limited inputting means, like a keypad comprising a limited number of keys.

The inputting of a modification request, the modifying and the displaying of the resulting compound graphics may be repeated until a desired resulting compound graphic is displayed.

The modifying of an illustrating graphical element may be a replacing of a displayed illustrating graphical element. The modifying of an illustrating graphical element may be also a removing of a displayed illustrating element. And the modifying of an illustrating graphical element may be an adding of a not yet displayed illustrating graphical element.

The modifying of an illustrating graphical element may involve a retrieving of an illustrating graphical element from the graphical element library.

The graphical element library and the compound graphics may described a certain comprehensive graphical subject. Accordingly, the illustrating graphical elements may represent graphical sub-subjects of the compound graphic or graphical element library, respectively. Preferably, several illustrating graphical elements may be illustrating graphical elements of the same sub-subject.

The compound graphic comprises at most one illustrating graphical element of each graphical sub-subject. The modification of an illustrating graphical element means that another illustrating graphical element of the same graphical sub-subject is composed to the compound graphics and replaces the before displayed illustrating graphical element.

The composition of a compound graphic may be described exemplary in view of a graphical subject "landscape". Graphical sub-subjects may be "foreground", "background" and "sky".

Each graphical sub-subject may comprise several illustrating graphical elements. The composition of the illustrating graphical elements of the graphical sub-subjects may lead to a compound graphic illustrating a "landscape" according to the given graphical subject.

Illustrating graphical elements of the graphical sub-subject "foreground" may be illustrating graphical elements showing: "broad-leaved trees", "coniferous tree", skyscrapers, "animals" like "horses", "cows", "persons", "aliens", "cars" or "lake". Illustrating graphical elements of the graphical sub-subject "background" may be illustrating graphical elements showing: "mountains", "hills", "misty landscape" or "city". Illustrating graphical elements of the graphical sub-subject " background " may be illustrating graphical elements showing: "sun", "cloudy sky", "clouds of a storm", "clouds in the sunset", "dusky sky", "fine weather" or "starry sky".

The number of illustrating graphical elements as well as the number of graphical sub-subjects according to a graphical subject of the compound graphic may be not limited.

The displaying of a compound graphic may comprise a composing of the illustrating graphical elements to the displayed compound graphic. Information like position of each illustrating graphical element within the compound graphic and/or overlaying of the illustrating graphical elements with reference to each other may be necessary. The illustrating graphical elements may comprise this information such that the positioning and the sequencing may be pre-defined.

The designation which may be comprised by the modification request may designate the graphical sub-subject. Therefore, the modification request may be a replacing of the illustrating graphical element of the designated graphical sub-subject with another illustrating graphical element of the same graphical sub-subject. A modification request designating a graphical sub-subject of the compound graphic may allow to modify the compound graphic even if only a limited number of means for inputting are available. The number of graphical sub-subjects of a compound graphic is lower than the total number of illustrating graphical elements provided for composing the compound graphic. Therefore for example, even a keypad of a mobile phone (ITU-T keypad) may be employed for inputting the modification requests in an adequate and user-friendly way.

The resulting compound graphic may be stored. The storing of the compound graphic may allow to employ the compound graphic for further operations or to modify the stored compound graphic at a later moment. Further, the resulting compound graphic may be included or appended to a text message. This feature may be interesting in combination with mobile phones able to transmit messages comprising graphics.

A menu may be offered to a user for selecting and inputting modification requests. The menu may be a text menu or a menu presenting graphical items for selecting. The menu may be operated by soft keys or function keys. The function of these keys may be described and defined by the menu items.

A keyboard or a keypad may be used for selecting and inputting modification requests, wherein keys of the keyboard or keypad have assigned certain pre-defined modification requests.

Selecting a key may toggle between illustrating graphical elements of a selection of illustrating graphical elements. The respective illustrating graphical elements may be listed in a pre-defined sequence. Toggling of the illustrating graphical elements means that a displayed illustrating graphical element is removed from the compound graphic and a new illustrating graphical elements is placed instead into the compound graphic. The new illustrating graphical element may preferably be the illustrating graphical element following the replaced illustrating graphical element in the pre-defined sequence.

Further, the sequence of illustrating graphical elements may be represented by illustrating graphical elements of one graphical sub-subject.

At least one illustrating graphical element may be an animated illustrating graphical element.

According to another embodiment of the invention a computer program for generating a compound graphic comprising a plurality of illustrating graphical elements is provided. The computer program comprises program portions for carrying out the operations of the aforementioned methods for generating a compound graphic when the software tool is implemented in a computer program and/or executed on a computer, a processing device or a mobile terminal.

According to a further embodiment of the invention a mobile terminal for generating a compound graphic comprising a plurality of illustrating graphical elements is provided. A graphical element library comprises the illustrating graphical elements. The mobile terminal further comprises storing means for storing the illustrating graphical elements or the graphical element library, respectively and pre-selecting means for pre-selecting illustrating graphical elements. The pre-selecting means may be a pre-defined selection of illustrating graphical elements which composition results in a compound graphic. Further, the mobile terminal further comprises displaying means for displaying a compound graphic composed of several illustrating graphical elements, inputting means comprising certain keys and modifying means for modifying an designated illustrating graphical element of the compound graphic in accordance with to a modification request. Each certain key of the inputting means initiates the corresponding modification request, which also comprises a designation of a corresponding illustrating graphical element of the compound graphic.

A modification request may comprise a designation of the illustrating graphical elements which may be modified according to the modification request. The modifying means may comprise a composing of the illustrating graphical elements wherein a modifying operation may comprise a removing of an illustrating graphical element, an adding of a further illustrating graphical element or a replacing of a displayed illustrating graphical element with another illustrating graphical element.

The mobile terminal may be a mobile communication terminal able to communicate via a mobile communication network. The resulting compound graphic may be appended to or included in a text message which may be communicated between mobile communication terminals via a mobile communication network, like global system for mobile communication (GSM), universals mobile telecommunication system (UMTS) or the like.

The graphical element library and the compound graphic may describes a certain comprehensive graphical subject, respectively. Accordingly, the illustrating graphical elements may represent graphical sub-subjects of the compound graphics or graphical element library, respectively. Preferably, several illustrating graphical elements may be illustrating graphical elements of the same graphical sub-subjects.

The compound graphic comprises at most one illustrating graphical element of each graphical sub-subject. The modification of an illustrating graphical element means that another illustrating graphical element of the same sub-subject is composed to the compound graphics and replaces the before displayed illustrating graphical element. It may be noted that a blank illustrating graphical element may be a legal member of a graphical sub-subject.

The modification of a compound graphic may comprise a retrieving of illustrating graphical elements from the graphical element library. Therefore, the mobile terminal may comprise retrieving means for retrieving an illustrating graphical element from the graphical element library.

The mobile terminal according to an embodiment of the invention may comprise storing means for storing the resulting compound graphic. The storing of the compound graphics may allow to employ the compound graphic for further operations or to modify the stored compound graphic at a later moment. Further, the resulting compound graphic may be included or appended to a text message. This feature may be interesting in combination with mobile phones able to transmit messages comprising graphics. Accordingly, the mobile terminal may comprise means for including and/or appending compound graphics to a text message.

A menu may be offered to a user for selecting and inputting modification requests. The menu may be a text menu or a menu presenting graphical items for selecting. The menu may be operated by soft keys or function keys. The function of these keys may be described and defined by the menu items.

A keypad is used for selecting and inputting modification requests, wherein keys of the keypad have assigned certain pre-defined modification requests. The keypad may be an ITU-T keypad of a mobile communication terminal or a QWERTY keyboard (typewriter keyboard). A pre-definition of the modification requests and the assignment of the modification requests to certain pre-defined keys of the keypad may be especially preferable in case of usage of an ITU-T keypad as inputting means.

Selecting a key may toggle between illustrating graphical elements of a selection of illustrating graphical elements. The respective illustrating graphical elements may be listed in a pre-defined sequence. Toggling of the illustrating graphical elements means that a displayed illustrating graphical element is removed from the compound graphics and a new illustrating graphical element is placed instead into the compound graphic. The new illustrating graphical element may preferably be an illustrating graphical element following the replaced illustrating graphical element in the pre-defined sequence.

Further, the sequence of illustrating graphical elements may be represented by illustrating graphical elements of one graphical sub-subject.

At least one illustrating graphical element may be an animated illustrating graphical element.

The graphical element library may be stored in the mobile terminal. The graphical element library may be exchangeable. An exchange of a graphical element library may be an exchange of at least one illustrating graphical element or of the whole graphical element library. The mobile terminal according to an embodiment of the invention may provide means for exchanging the graphical element library or parts of the graphical element library.

It may be noted that a mobile terminal according to an embodiment of the invention may be a mobile communication terminal for generating a compound graphic and having a controller, a memory, a transceiver for wireless communication and a user interface through which a user operates the mobile communication terminal, the user interface includes a keypad and a display. The mobile communication terminal furthermore comprises:
- a graphical element library containing a plurality of graphical elements and stored in the memory accessible by the controller,
- a graphic editor by means of which the user is allowed to generate a compound graphic comprising at least one illustrating graphical element,
- the controller displays a compound graphic comprising pre-selected illustrating graphical elements of the graphical element library,
- the controller modifies an illustrating graphical element on a user request initiated by selecting a key of the keypad wherein the user request comprises a designation of the illustrating graphical element to be modified and
- the controller displays a compound graphic of the illustrating graphical elements on the display of the user interface.

The displaying of the a compound graphic may comprise a composing of the compound graphic with respect to a positioning and sequencing of the displayed illustrating graphical elements. The information on position and overlaying of the illustrating graphical elements may be comprised thereby.

The controller may also retrieve illustrating graphical elements from the graphical element library. Further means introduced in combination with a mobile terminal for generating a compound graphic may be realised by operations of the controller of the mobile communication terminal.

The controller may also offer the possibility to exchange parts of the graphical element library or the whole graphical element library. Advantageously, the graphical element library or parts thereof may be uploaded using the ability of communicating via a mobile communication network.

For a better understanding of the present invention and to understand how the same may be brought into effect references will now be made, by the way of example only, to accompanying drawings, in which:
- Fig. 1: shows an exemplary compound graphic comprising several illustrating graphical elements and the illustrating graphical elements themselves,
- Fig. 2: illustrates schematically the operative steps of the method for generating compound graphics according to an embodiment of the invention,
- Fig. 3: illustrates schematically a possible logical structure of a graphical element library with respect to an embodiment of the invention.
- Fig. 4a: shows exemplary a plurality of illustrating graphical elements relating to the graphical sub-subject "head shapes" according to a comprehensive graphical element library of the graphical subject "smiley",
- Fig. 4b: shows exemplary a plurality of illustrating graphical elements relating to the graphical sub-subject "mouths" according to a comprehensive graphical element library of the graphical subject "smiley",
- Fig. 4c: shows exemplary a plurality of illustrating graphical elements relating to the graphical sub-subject "eyes and glasses" according to a comprehensive graphical element library of the graphical subject "smiley",
- Fig. 4d: shows exemplary a plurality of illustrating graphical elements relating to the graphical sub-subject "noses" according to a comprehensive graphical element library of the graphical subject "smiley",
- Fig. 4e: shows exemplary a plurality of illustrating graphical elements relating to the graphical sub-subject "hairs, hats and caps" according to a comprehensive graphical element library of the graphical subject "smiley",
- Fig. 5: illustrates a generation of a compound graphic, namely a "smiley" containing illustrating graphical elements of figures 4a, 4b, 4c, 4d and 4e,
- Fig. 6a: shows illustrating graphical elements for composing a compound graphic thereof according to an embodiment of the invention,
- Fig. 6b: shows a mobile phone operating the method for generating a compound graphic according to an embodiment of the invention and with respect to Fig. 6a,
- Fig. 7: illustrates a mobile terminal according to an embodiment of the invention,
- Fig. 8a: illustrates schematically the internal implementation of a mobile phone with respect to an embodiment of the invention and
- Fig. 8b: illustrates a mobile phone showing the external user interface with respect to Fig. 8a.

The compound graphic is composed of several illustrating graphical elements. The illustrating graphical elements may be retrieved from a graphical element library. Preferably, the illustrating graphical elements refer to a common graphical subject.

In an embodiment according to the present invention the method is described with regard to "smileys". Smileys or emoticons are well known and highly appreciated especially among young users, respectively, to append signs to text messages in order to express a broad variety of emotions. Normally, smileys or emoticons are put together of less ASCII signs, for example the shortcut ":-)" express a smiling face or the shortcut ":-(" express a sad face. The possibility to include or append graphics to text messages, especially in view of messages transmitted via mobile communication networks, makes it possible to replace the cryptic shortcuts with real graphic icons which can be understood easier, even to users not firm to the cryptic emoticons shortcuts. A smiling face may be expressed by " 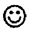 " instead of ":-)" or a sad face may be expressed by " 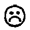 " instead of ":-(".

Such emoticons or related graphics but also graphics of further different graphical subjects may be provided by storing the graphics in a library for retrieving and utilising by the user. Such a library containing a limited number of unmodifiable graphics may not cover the wishes of users to use individual and situation adapted graphics. This disadvantage of static graphic libraries is solved by the employment of a graphical element library containing illustrating graphical elements which are adapted to a comprehensive graphical subject.

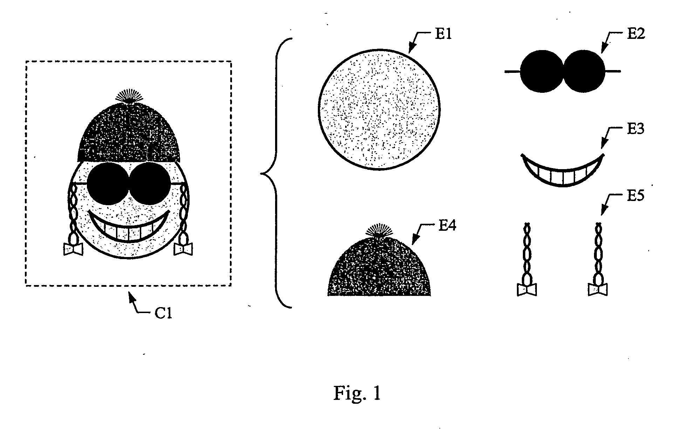

Fig. 1 shows an exemplary compound graphic comprising several illustrating graphical elements and the illustrating graphical elements themselves. The comprehensive graphical subject according to an embodiment of the present invention may be the visualisation of different individualised emoticons or smileys, respectively. Accordingly, Fig. 1 shows a possible smiley C1 as compound graphic.

This smiley C1 is composed of several illustrating graphical elements. The element E1 represents the shape and the filling colour of the head. The illustrating graphical element E1 may be one of several elements available for shape and filling colour of the head. The illustrating graphical element E2 relates to the design and look of the eyes. Herein the illustrating graphical element E2 may represent sunglasses, but also other designs and looks of the eyes of the smiley C1 may be possible. Furthermore, the illustrating graphical element E3 relates to the mouth of the smiley C1. Herein the illustrating graphical element E3 illustrates a laughing opened mouth. Additionally, the illustrating graphical elements E4 and E5 represent a cap and hairs, respectively.

The presented compound graphic C1, namely the smiley C1, composed of the illustrating graphical elements E1, E2, E3, E4 and E5 may not be limiting. The Fig. 1 shall introduce to the possibilities of a graphic editing method according to an embodiment of the present invention. The graphical element library may be a certain comprehensive graphical subject or theme, respectively, and therefore the illustrating graphical elements may relate to different graphical sub-subjects. Preferably, a plurality of illustrating graphical elements may relate to the same graphical sub-subject so that the user may compose individually the illustrating graphical elements to a compound graphic. Following figures will further enlighten the method and extend the example according to Fig. 1.

In the following, the method for generating a compound graphic according to an embodiment of the invention may be described in detail. The compound graphic may be composed of a plurality of illustrating graphical elements.

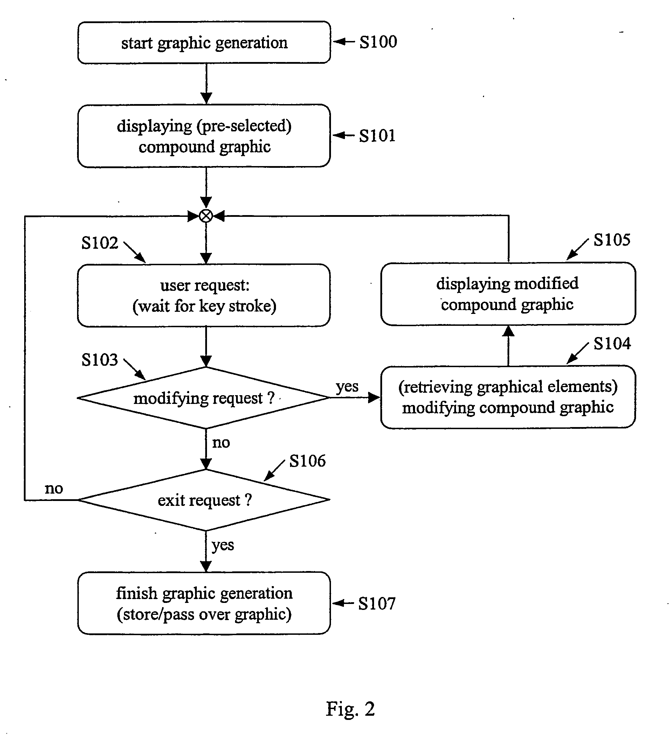

Fig. 2 illustrates schematically the operative steps of the method for generating compound graphics according to an embodiment of the invention.

In a step S100, the generation of a compound graphic is started.

In a step S101, a default compound graphic is displayed. The default compound graphic is composed of pre-selected illustrating graphical elements. The composing of the illustrating graphical elements to a compound graphic may comprise information on the position and on the overlaying of the illustrating graphical elements. The illustrating graphical elements may comprised information of the position at which they may have to be displayed. Further, the sequence of displaying or composing the illustrating graphical elements may be important in case that illustrating graphical elements may cover parts of other displayed illustrating graphical elements. Therefore, the composing may comprise information if the illustrating graphical element may be a background illustrating graphical element, a foreground illustrating graphical element. The composing may comprise a layer information in order to arrange the illustrating graphical elements in an appropriate sequence.

In a step S102, a user request defines a modification operation of the displayed compound graphic. The modification request may relate to exchanging, adding or replacing of an illustrating graphical element.

A user request may be defined by selecting a certain key of a keyboard or a keypad, respectively. The keys are assigned to certain pre-defined modification operations. The keys are assigned to the modification of illustrating graphical elements of a graphical sub-subject of the comprehensive graphical subject of the compound graphic, for example with regard to Fig. 1 to the modification of the head shape, eyes, mouth and the like. The assignment of the keys to certain pre-defined modification operations may be presented by a key assignment table. Such a key assignment table may be adapted to the comprehensive graphical subject or theme of the graphical element library and its graphical sub-subjects represented by the illustrating graphical elements of the library. Furthermore, this assignment method for initiating modification operations may enable to assign a plurality of illustrating graphical elements to a single key, wherein the selecting of the respective key may toggle the displaying between the different illustrating graphical elements designating the same graphical sub-subject.

Further, a user request may be initiated by selecting of a menu item of a menu. Such a menu may be a text menu or a graphical menu which may be operated by soft keys or function keys, respectively. Such a menu may allow to give a pre-view of the illustrating graphical element which may be effected by the modification operation or may show an illustrating graphical element which may replace a displayed illustrating graphical element.

The user request may also be a general user request, like storing the current displayed compound graphic, passing over the displayed compound graphic for further operations (transmitting via a mobile communication network, appending to a text message), leaving the graphic generation or the like.

In a step S103, in case of a modifying request the operation sequence is continued with step S104 Otherwise the operation sequence is continued with step S106

In a step S104, the user modification request defines a modification operation of the displayed compound graphic. According to the modification operation it may be necessary to retrieve an illustrating graphical element from the graphical element library.

The modification operation of the displayed compound may involve a replacing operation of an illustrating graphical element of the displayed compound graphic with an illustrating graphical element which may be retrieved from the graphical element library according to the modification request of the user. The modification operation may also involve an adding operation of an illustrating graphical element which may be retrieved from the graphical element library according to the modification request of the user.

In a step S105, the modified compound graphic is displayed. The displaying of the modified compound graphic allows the user to assess the current composing of the illustrating graphical elements which result in the compound graphic.

The displaying of the compound graphic may include a composing of the illustrating graphical elements to a compound graphic. The composing may comprise information on the position and on the overlaying of the illustrating graphical elements. Therefore, the illustrating graphical elements may comprise information of their positions within a compound graphic and information of their layer arranging in order to compose the compound graphic of a correct illustrating graphical element sequence.

Further, the sequence is continued with step S102 and modification of the compound graphic may be initiated by further user requests.

In a step S106, in case of an exit request the sequence may be continued with step S107. Otherwise the sequence may be continued with step S102 for operating further following user requests.

In a step S107, the finishing of the compound graphic generation may involve further operations like storing the current displayed compound graphic, passing over the displayed compound graphic for further operations (transmitting via a mobile communication network, appending to a text message), leaving the graphic generation or the like.

The above described generation of a compound graphic consisting of several illustrating graphical elements may allow to generate a high number of compound graphics out of a limited number of single illustrating graphical elements.

The following figures will describe a possible structure of a graphical element library containing illustrating graphical elements according to an embodiment of the invention. The logical structure of the graphical element library may be based on the structuring corresponding to the graphical sub-subject of the graphical subject of the graphical element library.

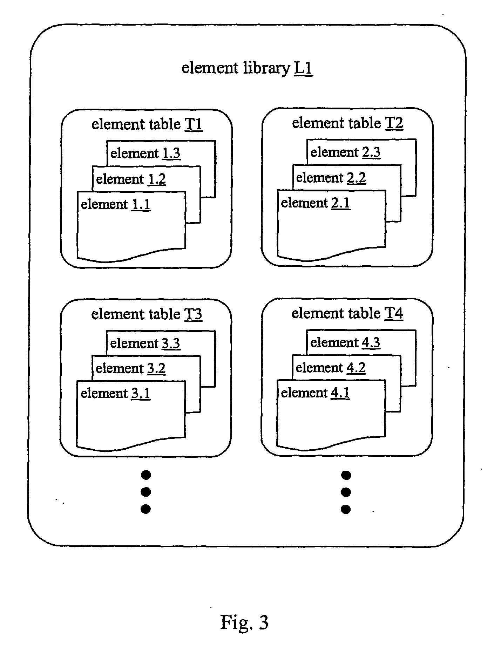

Fig. 3 illustrates schematically a possible logical structure of a graphical element library with respect to an embodiment of the invention. The graphical element library L1 may contain several element tables T1, T2, T3 and T4. These element tables may represent an arbitrary number of element tables contained in the graphical element library L1. The element tables may represent different graphical sub-subject.

Each element table T1, T2, T3 or T4 may contain an arbitrary number of illustrating graphical elements. Herein, the element table T1 may contain the illustrating graphical elements 1.1, 1.2 and 1.3, the element table T2 may contain the illustrating graphical elements 2.1, 2.2 and 2.3, the element table T3 may contain the illustrating graphical elements 3.1, 3.2 and 3.3 and the element table T4 may contain the illustrating graphical elements 4.1, 4.2 and 4.3. The illustrating graphical elements of each element table T1, T2, T3 or T4 may be illustrating graphical elements according to the graphical sub-subject of the element table.

This logical structure of the graphical element library may enable the user to modify a compound graphic consisting of a selection of the illustrating graphical elements in a fast and easy manner while a broad variety of resulting compound graphics may be achieved.

For example, the selected or pre-selected compound graphic, see Fig.1 step S101, may be composed of one illustrating graphical elements of each element table of the graphical element library L1. These illustrating graphical elements may be the illustrating graphical elements 1.1, 2.1, 3.1 and 4.1.

A modification request of a user may be a request instructing to modify an illustrating graphical element of a certain graphical sub-subject. For example, the illustrating graphical element 2.1 may be exchanged against another illustrating graphical element. The illustrating graphical element 2.1 may be only exchanged against another matching illustrating graphical element, i.e. an illustrating graphical element of the same graphical sub-subject or an illustrating graphical element of element table T2 which contains the displayed illustrating graphical element 2.1. All other displayed illustrating graphical elements may remain in the compound graphic unmodified. A modification request may "toggle" within the element table T2 for selecting an illustrating graphical element for exchanging the displayed illustrating graphical element 2.1. "Toggling" means that the next illustrating graphical element of the element table T2 may be employed to modify the display compound graphic, e.g. the illustrating graphical element 2.2. If illustrating graphical element 2.2 is displayed and a modification request instructs to exchange the display illustrating graphical element 2.2 illustrating graphical element 2.3 may be used, i.e. the illustrating graphical element with the higher number herein. If no following illustrating graphical element is available within the respective element table the first illustrating graphical element may be employed for modification and be displayed again.

In the following an embodiment of a part of a graphical element library may be presented. The graphical subject of the exemplary graphical element library may be "smileys". It shall be understood that the represented number, arrangement and sequence of the illustrating graphical elements is only exemplary and not limiting. Further illustrating graphical elements may be possible and even the graphical subject of the graphical element library is not limited to the presented graphical subject "smiley".

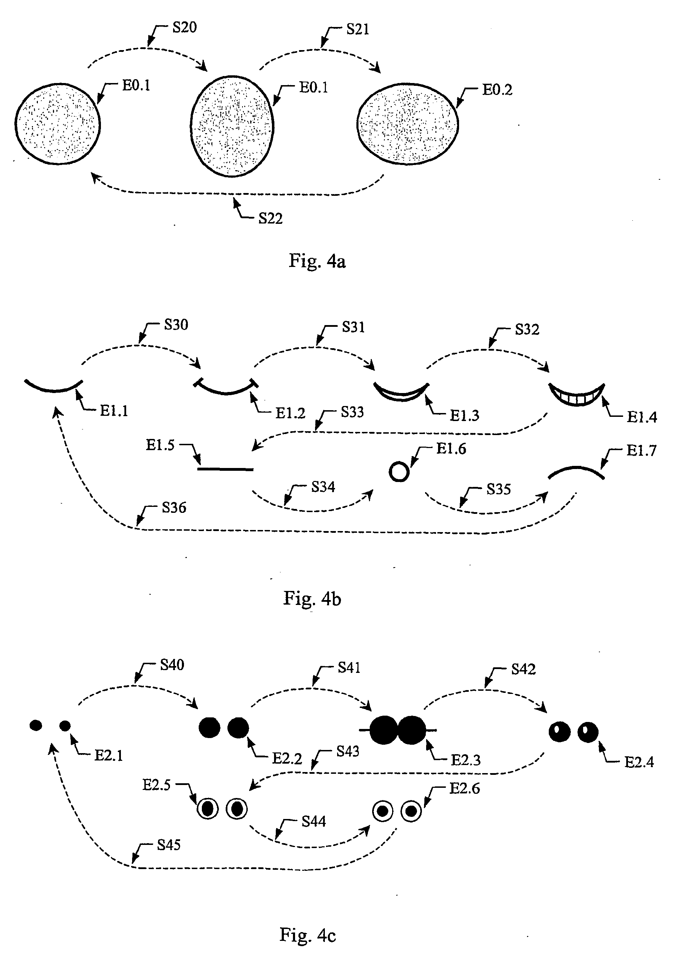

Fig. 4a shows exemplary a plurality of illustrating graphical elements relating to the graphical sub-subject "head shapes" corresponding to a comprehensive graphical element library of the graphical subject "smiley". Three different illustrating graphical elements E0.1, E0.2 and E0.3 are presented representing different shapes of "heads". According to the above described "toggling" between the illustrating graphical elements a modification request may follow the depicted arrows S20, S21 and S22. That means that in case of a displayed illustrating graphical element E0.1 the illustrating graphical element E0.2 may be displayed after modification of the compound graphic. In case of a displayed illustrating graphical element E0.2 the illustrating graphical element E0.3 may be displayed after modification of the compound graphic. And in case of a displayed illustrating graphical element E0.3 the illustrating graphical element E0.1 may be displayed after modification of the compound graphic.

Further illustrating graphical elements may be possible, for example head shapes of different eccentricity, as also another sequence of the illustrating graphical elements.

Fig. 4b shows exemplary a plurality of illustrating graphical elements relating to the graphical sub-subject "mouths" corresponding to a comprehensive graphical element library of the graphical subject "smiley". The illustrating graphical elements E1.1, E1.2, E1.3, E1.4, E1.5, E1.6 and E1.7 represent different shapes of "mouths". A toggling between the different illustrating graphical elements may follow the depicted arrows S30, S31, S32, S33, S34, S35 and S36. The displaying of the illustrating graphical element within the compound graphic controlled by user requests may follow the sequence illustrated by the arrows.

Further illustrating graphical elements may be possible as also another sequence of the illustrating graphical elements.

Fig. 4c shows exemplary a plurality of illustrating graphical elements relating to the graphical sub-subject "eyes and glasses" corresponding to a comprehensive graphical element library of the graphical subject "smiley". The illustrating graphical elements E2.1, E2.2, E2.3, E2.4, E2.5 and E2.6 represent different shapes of "eyes and glasses". A toggling between the different illustrating graphical elements may follow the depicted arrows S40, S41, S42, S43, S44 and S45. The displaying of the illustrating graphical element within the compound graphic controlled by user requests may follow the sequence illustrated by the arrows.

Further illustrating graphical elements may be possible as also another sequence of the illustrating graphical elements.

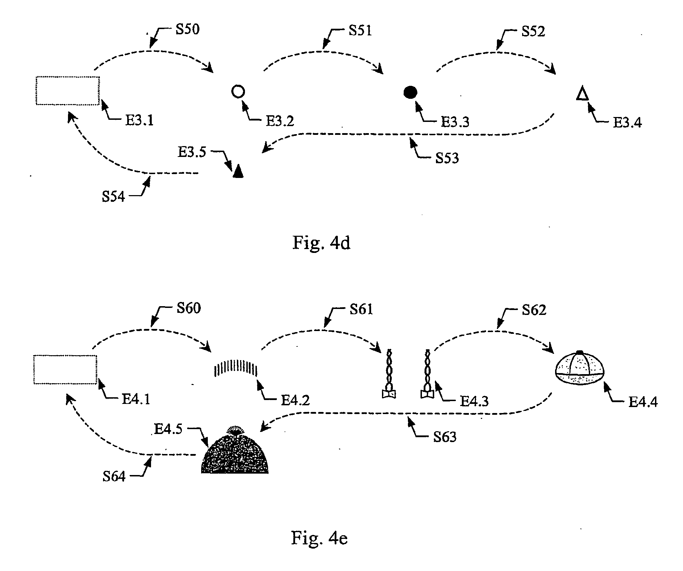

Fig. 4d shows exemplary a plurality of illustrating graphical elements relating to the graphical sub-subject "noses" corresponding to a comprehensive graphical element library of the graphical subject "smiley". The illustrating graphical elements E3.1, E3.2, E3.3, E3.4 and E3.5 represent different shapes of "noses". A toggling between the different illustrating graphical elements may follow the depicted arrows S50, S51, S52, S53 and S54. The displaying of the illustrating graphical element within the compound graphic controlled by user requests may follow the sequence illustrated by the arrows. A particular position may be taken by the illustrating graphical element E3.1. The dotted lines of the depicted rectangle may indicate an blank illustrating graphical element. Blank illustrating graphical elements may be also legal members of a graphical sub-subject. The modification operation may be performed and treated similar to the above described modification operations. Replacing of a blank illustrating graphical element may be equal to an removing or adding operation of a non-blank illustrating graphical element.

Further illustrating graphical elements may be possible as also another sequence of the illustrating graphical elements.

Fig. 4e shows exemplary a plurality of illustrating graphical elements relating to the graphical sub-subject "hairs, hats and caps" corresponding to a comprehensive graphical element library of the graphical subject "smiley". The illustrating graphical elements E4.1, E4.2, E4.3, E4.4 and E4.5 represent different shapes of "hairs, hats and caps". A toggling between the different illustrating graphical elements may follow the depicted arrows S60, S61, S62, S63 and S64. The displaying of the illustrating graphical element within the compound graphic controlled by user requests may follow the sequence illustrated by the arrows. The illustrating graphical element E4.1 may be an blank illustrating graphical element. The properties and the use of this blank illustrating graphical element may be performed analog to the above described illustrating graphical element E3.1 shown in Fig. 4d.

Further illustrating graphical elements may be possible as also another sequence of the illustrating graphical elements.

The illustrating graphical elements in figures 4a, 4b, 4c, 4d and 4e may represent illustrating graphical elements of the element tables described in Fig. 3. The total number of illustrating graphical elements of figures 4a, 4b, 4c, 4d and 4e are associated in the umbrella graphical element library of the graphical subject "smiley" and the illustrating graphical elements presented in Fig. 4a, 4b, 4c, 4d and 4e represent graphical sub-subjects of the comprehensive graphical subject of the graphical element library, respectively, and therefore may be associated with the above mentioned element tables (T1, T2, T3 and T4 shown in Fig. 3).

The following figure will describe the selection of illustrating graphical elements on user requests with respect to a concrete exemplary graphical element library and the logical structure thereof which allows a fast and easy access to modifications of the resulting compound graphic.

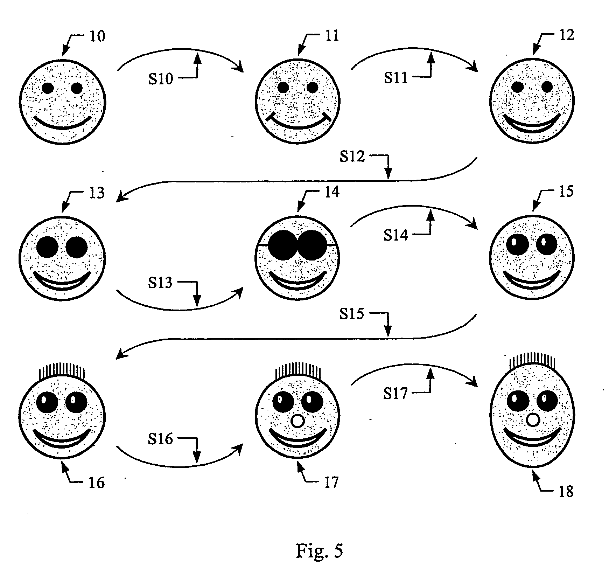

Fig. 5 illustrates a generation of a compound graphic, namely a "smiley" containing illustrating graphical elements of figures 4a, 4b, 4c, 4d and 4e. An initial pre-selected compound graphic may be displayed to the user. This initial pre-selected compound graphic may be modified by user requests to generate a compound graphic according to the wishes and desires of the user.

The initial pre-selected compound graphic may be indicated by reference numeral 10. The compound graphic 10 is composed of the illustrating graphical elements E0.1, E1.1, E2.1, E3.1 and E4.1 of the figures 4a, 4b, 4c and 4d, respectively. Only the illustrating graphical elements E0.1, E1.1 and E2.1 may be visible since the illustrating graphical elements E3.1 and E4.1 may be blank illustrating graphical elements. The blank illustrating graphical elements are also accessible and modifiable by user modification requests.

Further, it shall be assumed that user requests may be inputted by selecting a key of a keyboard or a keypad. Selecting of a certain key initiates a pre-defined modification operation of the compound graphic or an illustrating graphical element of the compound graphic. The following table may represent such a pre-definition of modification operations initiated by selecting a respective key.

| request key | graphical sub-subject | graphical elements |
|---|---|---|
| "1" | "shape of head" | E0.1 - E0.3, Fig. 4a |
| "2" | "mouth" | E1.1 - E1.7, Fig. 4b |
| "3" | "eyes and glasses" | E2.1 - E2.6, Fig. 4c |
| "4" | "nose" | E3.1 - E3.5, Fig. 4d |
| "5" | "hairs, hats and caps" | E4.1 - E4.5, Fig. 4e |

Each selection of one of the defined keys "toggles" between the respective illustrating graphical elements according to the sequence presented in the respective figures of the illustrating graphical elements.

In the following an exemplary generation of a compound graphic 18 out of the pre-selected displayed compound graphic 10 is shown. The compound graphic 10 may consist of the illustrating graphical elements E0.1, E1.1, E2.1, E3.1 and E4.1. The pre-selection may be simply based on selecting the first illustrating graphical elements of each sub-subject element table.

In a step S10 the user may request to modify the displayed illustrating graphical element of the graphical sub-subject designed as "mouth". Therefore, the user may select the key "2" of the keypad or keyboard, respectively. The modification request initiates a modification operation which replaces the illustrating graphical element E1.1 with the next following illustrating graphical element E1.2. The respective sequence of illustrating graphical elements of the graphical sub-subject "mouth" is shown in Fig. 4b and the sequence of the illustrating graphical elements is shown by the arrows S30 to S36 beginning with the illustrating graphical element E1.1. The resulting compound graphic 11 consists now of the illustrating graphical elements E0.1, E1.2, E2.1, E3.1 and E4.1. The composition of these illustrating graphical elements leads to the shown compound graphic 11.

The modification request only defines or designates the illustration graphical element of the compound graphic, respectively, to be modified. The definition or designation defines automatically additional displaying parameters, respectively, for example displaying position of illustrating graphical element or if the illustrating graphical element may be display as a background element or as a foreground element. The illustrating graphical elements E0.1-E0.3 may be background elements whereas remaining illustrating graphical elements E1.1 - E1.7, E2.1 - E2.6, E3.1 - E3.5 and E4.1 - E4.5 may be foreground elements.

In a step S11 the user may further request to modify the displayed illustrating graphical element of the graphical sub-subject designed as "mouth" of compound graphic 11. Therefore, the user may select the key "2" of the keypad or keyboard, respectively. The modification request initiates a modification operation which replaces the illustrating graphical element E1.2 with the next following illustrating graphical element E1.3. The resulting compound graphic 12 consists now of the illustrating graphical elements E0.1, E1.3, E2.1, E3.1 and E4.1. The composition of these illustrating graphical elements leads to the shown compound graphic 12.

In a step S12 the user may further request to modify the displayed illustrating graphical element of the graphical sub-subject designed as "eyes and glasses" of compound graphic 12. Therefore, the user may select the key "3" of the keypad or keyboard, respectively. The modification request initiates a modification operation which replaces the illustrating graphical element E2.1 with the next following illustrating graphical element E2.2. The resulting compound graphic 13 consists now of the illustrating graphical elements E0.1, E1.3, E2.2, E3.1 and E4.1. The composition of these illustrating graphical elements leads to the shown compound graphic 13.

In a step S13 the user may further request to modify the displayed illustrating graphical element of the graphical sub-subject designed as "eyes and glasses" of compound graphic 13. Therefore, the user may select the key "3" of the keypad or keyboard, respectively. The modification request initiates a modification operation which replaces the illustrating graphical element E2.2 with the next following illustrating graphical element E2.3. The resulting compound graphic 14 consists now of the illustrating graphical elements E0.1, E1.3, E2.3, E3.1 and E4.1. The composition of these illustrating graphical elements leads to the shown compound graphic 14.

In a step S14 the user may further request to modify the displayed illustrating graphical element of the graphical sub-subject designed as "eyes and glasses" of compound graphic 14. Therefore, the user may select the key "3" of the keypad or keyboard, respectively. The modification request initiates a modification operation which replaces the illustrating graphical element E2.3 with the next following illustrating graphical element E2.4. The resulting compound graphic 15 consists now of the illustrating graphical elements E0.1, E1.3, E2.4, E3.1 and E4.1. The composition of these illustrating graphical elements leads to the shown compound graphic 15.

In a step S15 the user may further request to modify the displayed illustrating graphical element of the graphical sub-subject designed "hairs, hats and caps" of compound graphic 15. Therefore, the user may select the key "5" of the keypad or keyboard, respectively. The modification request initiates a modification operation which replaces the illustrating graphical element E4.1 with the next following illustrating graphical element E4.2. The resulting compound graphic 16 consists now of the illustrating graphical elements E0.1, E1.3, E2.4, E3.1 and E4.2. The composition of these illustrating graphical elements leads to the shown compound graphic 16.

In a step S16 the user may further request to modify the displayed illustrating graphical element of the graphical sub-subject designed "nose" of compound graphic 16. Therefore, the user may select the key "4" of the keypad or keyboard, respectively. The modification request initiates a modification operation which replaces the illustrating graphical element E3.1 with the next following illustrating graphical element E3.2. The resulting compound graphic 17 consists now of the illustrating graphical elements E0.1, E1.3, E2.4, E3.3 and E4.2. The composition of these illustrating graphical elements leads to the shown compound graphic 17.

In a step S17 the user may further request to modify the displayed illustrating graphical element of the graphical sub-subject designed "head" of compound graphic 17. Therefore, the user may select the key "1" of the keypad or keyboard, respectively. The modification request initiates a modification operation which replaces the illustrating graphical element E0.1 with the next following illustrating graphical element E0.2. The resulting compound graphic 18 consists now of the illustrating graphical elements E0.2, E1.3, E2.4, E3.3 and E4.2. The composition of these illustrating graphical elements leads to the shown compound graphic 18.

The resulting compound graphic 18 may be obtained by selecting the key sequence: 2, 2, 3, 3, 3, 5, 4, 1 according to the definition of the modification operations described in the key assignment table above. All arbitrary permutations of this key sequence lead to the same resulting compound graphic 18 if the initial compound graphic 10 consists of the illustrating graphical elements E0.1, E1.1, E2.1, E3.1 and E4.1 and the sequence of the remaining displayed illustrating graphical elements is given like shown in the figures 4a, 4b, 4c, 4d and 4e.

This method for generating a compound graphic allows a user to generate a total number of 3150 different compound graphics coming from summarised total 26 illustrating graphical elements ("head": 3 elements, "mouth": 7 elements, "eyes and glasses": 6 elements, "hairs, hats and caps": 5 elements and "nose": 5 elements).

The access method of "toggling" between illustrating graphical elements of the sub-subjects allows a fast, easy and reasonable access to the high number of different compound graphics. The "toggling" of the illustrating graphical elements structured into different graphical sub-subjects may be especially useful to be used for inputting modification requests by terminals having limited inputting components such as mobile terminal, for example mobile phones. Usually, mobile phones are equipped with ITU-T keypads with just a few added soft or functional keys. The "toggling" may provide an adequate user interface for composing a compound graphic like described above. The following table may present another possible embodiment for inputting modification requests.

| key | modification operation |
|---|---|
| 1 | toggle between basic smileys: smiling and sad face, some more basic emoticons |
| 2 | toggle between circle, vertical ellipse and horizontal ellipse (the magnitude/eccentricity can be influenced by the arrow keys). |
| 3 | invert black and white, some colours (if coloured a display is available) |
| 4 | toggle eyes between smiling, crying, sleeping, twinkling, wide open, ... |
| 5 | toggle mouth between smiling, flat, sad, crying, open, tongue |
| 6 | toggle between no and different kinds of hairstyles and hats |
| 7 | toggle ears and noses between no, small, big, long, broad, ... |
| 8 | toggle between no and different kind of animations (if e.g. MMS (multimedia messaging service) is supported by the mobile phone) |
| 9 | space for more fancy features |
| 0 | toggle between simple, double (original - opposite) or triple (smooth transition from original to opposite) smileys |
| * | toggle between simple, double or triple smileys (all of the same occurrence) |
| # | same as above, but vice versa |

Extended inputting components like a QWERTY-keyboard (typewriter keyboard) may allow to use more request inputting keys in order to offer a user an extended request control of the composition of the compound graphic. All these functions can also be provided via a selection list of an options menu.

The above presented method for inputting user requests for modification operations may be transferred easily to other graphical subjects of the compound graphics if the graphical subjects of the respective compound graphic may be divided into different graphical sub-subjects each represented by several illustrating graphical elements.

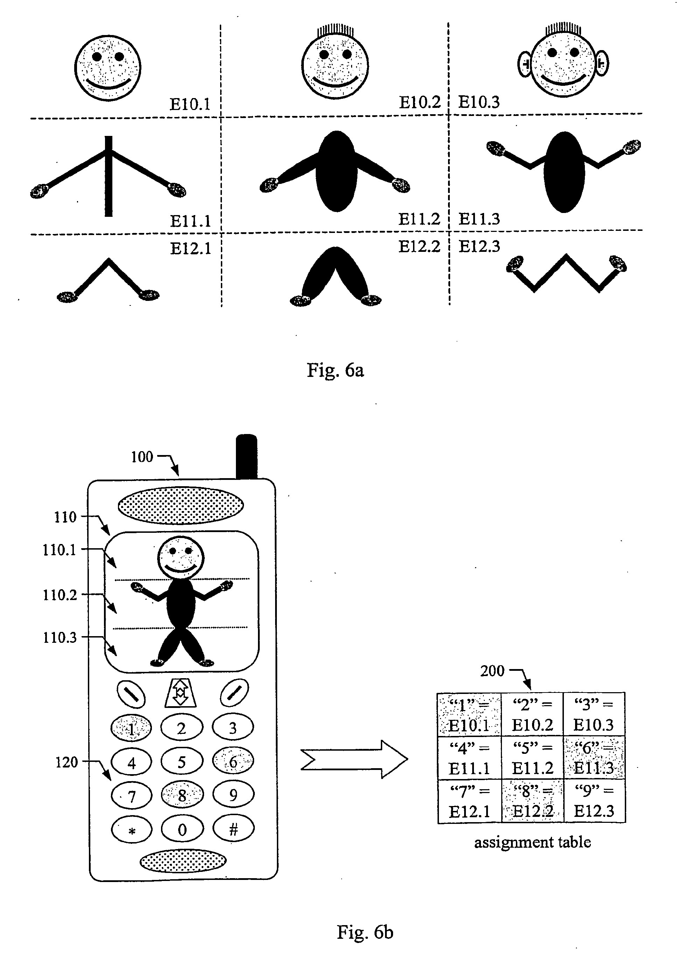

Another user request inputting may be described in the following figures 6a and 6b. The description of this embodiment according to the invention is illustrated with regard to an ITU-T keypad normally used for example in mobile phones.

Fig. 6a shows illustrating graphical elements for composing a compound graphic thereof according to an embodiment of the invention. A graphical element library may comprise the illustrating graphical elements E10.1, E10.2, E10.2, E11.1, E11.2, E11.2 and E12.1, E12.2, E12.2. A compound graphic generated for these illustrating graphical elements may consist of three illustrating graphical elements, wherein a first illustrating graphical element may be selected out of the list comprising the illustrating graphical elements E10.1, E10.2, E10.2, a second illustrating graphical element may be selected out of the list comprising the illustrating graphical elements E11.1, E11.2, E11.2 and a third illustrating graphical element may be selected out of the list comprising the illustrating graphical elements E12.1, E12.2, E12.2.

According to the above introduced structuring of a graphical element library the graphical subject of the graphical element library may be designated as "matchstick man". The sub-subjects may be designated as "head", "body" and "legs". Accordingly, the illustrating graphical elements E10.1, E10.2 and E10.3 may be related to the graphical sub-subject "head", the illustrating graphical elements E11.1, E11.2 and E11.3 may be related to the graphical sub-subject "body" and the illustrating graphical elements E12.1, E12.2 and E12.3 may be related to the graphical sub-subject "legs".

One illustrating graphical element out of the illustrating graphical elements of each sub-subjects may be combined in an arbitrary manner to a meaningful compound graphic.

Fig. 6b shows a mobile phone operating the method for generating a compound graphic according to an embodiment of the invention and with respect to Fig. 6a. The display 110 of the mobile phone 100 shows a possible compound graphic generated of the illustrating graphical element described in Fig. 6a. The display may be divided into three sections, an upper section 110.1, a middle section 110.2 and a lower section 110.3. Each section may be reserved for displaying one illustrating graphical element of the three defined graphical sub-subjects (see Fig. 6a). According to the designations of the graphical sub-subjects, an illustrating graphical element of the graphical sub-subject "head" may be displayed in the upper display section 110.1, an illustrating graphical element of the graphical sub-subject "body" may be displayed in the upper display section 110.2 and an illustrating graphical element of the graphical sub-subject "legs" may be displayed in the upper display section 110.3. The depicted compound graphic consists of the illustrating graphical elements E10.1, E11.3 and E12.2.

The corresponding key assignment table of the ITU-T keypad 120 to select the displaying of the illustrating graphical elements may be presented by assignment table 200. The depicted "matchstick man" may be given by selecting the keys 1, 6 and 8 according to the assignment table 200. Each key may have assigned an operation to display a certain assigned illustrating graphical element wherein only one illustrating graphical element of one key row may be displayed.

This assignment of user requests for modification operations may be advantageous for compound graphics which are composed of three illustrating graphical elements wherein for each illustrating graphical element three alternative illustrating graphical elements may be provided. Further compound graphics may be divided vertically so that the key assignment table for user requests of modification operations may also be vertically oriented.

A mobile terminal according to the invention may be employed for generating a compound graphic according to an embodiment of the method for generating a compound graphic of the invention. The method for generating a compound graphic according to the invention is described in detail above. Means for performing the operative steps of the method with respect to an embodiment may have to be implemented into the mobile terminal.

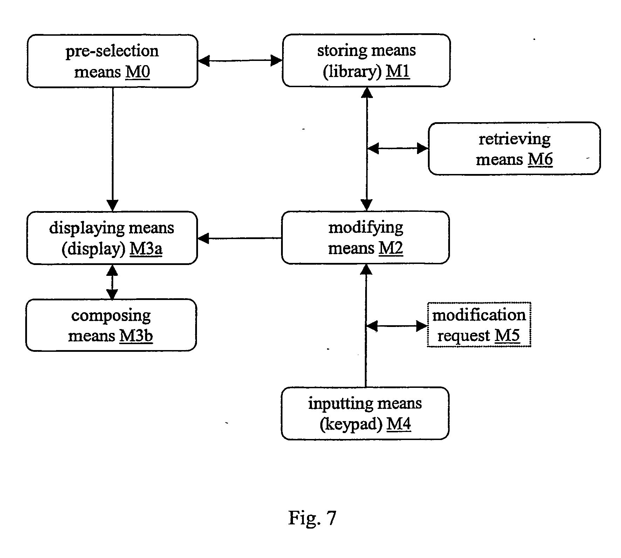

Fig. 7 illustrates the means of a mobile terminal for generating a compound graphic according to an embodiment of the invention. The means offer the possibility to perform the operative steps of the method for generating a compound graphic according to an embodiment of the invention.

It may be noted that the means may represent a code section, a dedicated data processing unit or may be realized by a program section. Moreover, the means may be an executable script executed by a processing unit or processing device. Further, the means may represent code sections containing instructions for executing the respective functions or operations of the means.

The pre-selection means M0 may pre-select a selection of a plurality of illustrating graphical elements. These pre-selected illustrating graphical elements may be retrieved from the graphical element library which may be stored using storing means M1. The storing means may be a random access memory (RAM), a read only memory (ROM) or another storing products such as computer readable mediums able to store a graphical element library comprising illustrating graphical elements. These pre-selected illustrating graphical elements may be displayed using a displaying means. The displaying means may be a display able to show the illustrating graphical element or the compound graphic composed of the display illustrating graphical elements.

The displaying of the compound graphic may comprise a composing of the illustrating graphical elements. The illustrating graphical elements may comprise information of their positions within the compound graphic and information of their overlaying concerning each other. The sequencing of the illustrating graphical elements may be controlled by the overlaying information.

Inputting means enable a user to generate a modification request. The inputting means are a keypad. Selecting of a key of the keypad may initiate a user modification request, respectively. The touchscreen includes a sensitive surface which upon a user touch initiates the modification request.

The modification request may designate an illustrating graphical element to be modified.

Moreover, the inputting means may comprise offering a menu. Selecting a menu item by a user may initiate a modification request. The menu may be a text based menu or a menu showing icons or graphics. A menu item may illustrate a respective modification request or the concerning illustrating graphical element.

Modification means may operate a modification operation according to the modification request. The modification operation may be a replacing operation, an adding operation or a removing operation. The modification operation may involve means for retrieving an illustrating graphical element from the graphical element library.

A modified compound graphic may be displayed after the modification operation. The displaying of the modified compound graphic may involve again the above described composing of the illustrating graphical elements to a compound graphic.

The mobile terminal may be a mobile communication terminal or a mobile phone, respectively. Mobile phones usually comprise a processing unit for controlling the functions of the mobile phone and especially the communication with the mobile communication network. Further, modem mobile phones comprise not only telephony functionality but also features like telephone number and/or address data base, text message generation, transmission and reception, electronic calendar etc. The functions and features of modem mobile phones are normally realised by implementation of this features as a software program or a code section of a software program. The method for generating a compound graphic may be additionally implemented as a software program or a code section extending the functions and features of a mobile phone. The method according to an embodiment of the invention may be further included within a graphic editor.

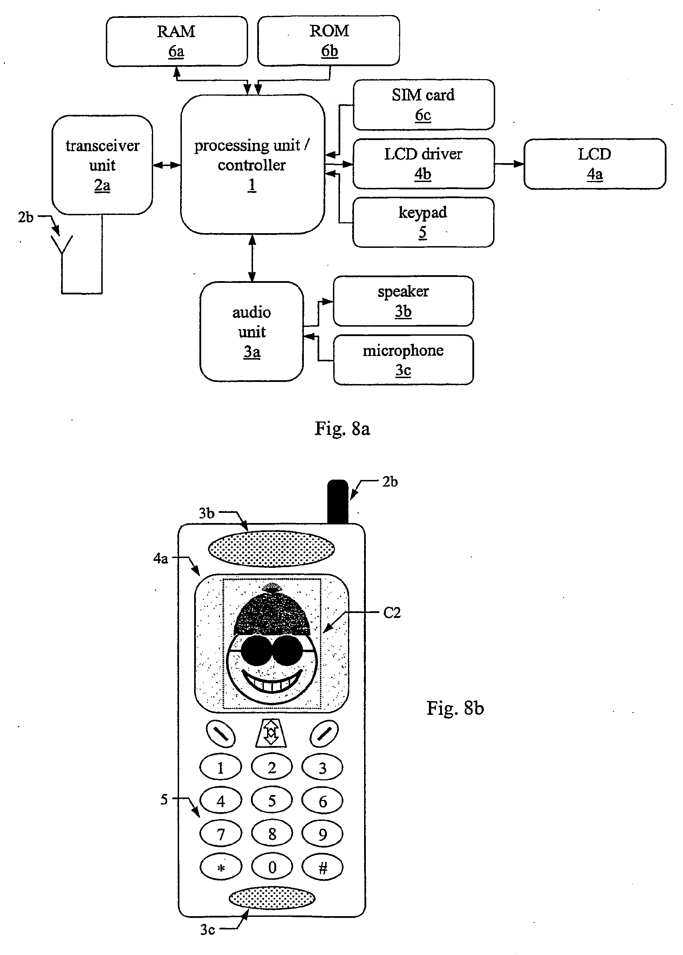

Fig. 8a illustrates schematically the internal implementation of a mobile phone. Fig. 8b illustrates a mobile phone showing the external user interface. The following description of the Fig. 8a and Fig. 8b will be treated commonly due to the fact that both figures describes a common embodiment according to the invention. Related and equal features of the figures are indicated by common reference numerals.

The mobile phone may be controlled by a processing unit or controller 1, respectively. Different further units may be connected to the controller 1. A transceiving unit 2a may be connected to the controller 1. The transceiving units may be able to transmit signals to a base station of a mobile communication network or to receive signals therefrom by antenna 2b. The transmitted and received signals may be digitally coded voice and/or data signals. Voice signals may be processed additionally in an audio unit 3a connected to the controller 1 and to a microphone 3c for recording audio signals and a speaker 3b for generating and playing audio signals. The voice signal may be processed by an analog-to-digital A/D converter (microphone recorded signals) or a digital-to-analog D/A converter (signals to speaker), respectively. A random access memory (RAM) 6a and a read only memory (ROM) 6b may be further provided to the mobile phone and connected to the controller 1. The RAM 6a and ROM 6b may be used for storing program products which are executed to operate the mobile phone. The user interface of the mobile phone comprises a keypad 5, a liquid crystal display (LCD) driver 4b and a LC display 4a. In order to identify uniquely the mobile phone a subscriber identification module (SIM) card may be comprised.

The mobile phone may be a mobile phone adapted to connect with a GSM 900 MHz and/or GSM 1800 MHz mobile communication network, but the invention may be also adapted to connect related other mobile communication networks, like UMTS. Further, the mobile phone may be able to communicate text messages, e.g. according to the SMS standard of GSM. Moreover, the SMS standard may be enhanced for communicating graphics included or appended to text messages.

Graphics to be included or appended to text messages may be generated using a graphic editor implemented in the mobile phone. The graphic editor may be able to generate graphics according to the method for generating a compound graphic with respect to an embodiment of the present invention. Embodiments of the method for generating compound graphics are described in detail above. A code section, a software tool or a computer program may be implemented and executed by the controller 1 or the processing unit of the mobile phone, respectively. The graphical element library may be stored in the RAM 6a or the ROM 6b of the mobile phone. Therefore, the ROM 6b may be a modifiable ROM 6b like a flashable ROM 6b.

The pre-selection means for pre-selecting illustrating graphical elements may be a code section, a dedicated data processing unit or may be realized by a program section executed at the controller 1. The modifying means for modifying a compound graphic may be a code section, a dedicated data processing unit or may be realized by a program section executed at the controller 1. The inputting of a modification request may employ the keypad 5 of the mobile phone, which may be an ITU-T keypad. The displaying means for displaying a compound graphic may be the liquid crystal (LC) display 4a of the mobile phone.

The provided means may enable to implement the method for generating a compound graphic according to an embodiment of the invention. The pre-selection means pre-selects illustrating graphical elements which may be retrieved from the stored graphical element library and be composed to a compound graphic. The pre-selected compound graphic may be display in the LC display 4a.

The modification of the displayed compound graphic may be controlled by a user via the keypad 5 of the mobile phone. A selection of a key may initiate a modification operation. The modification operation may be assigned to the keys of the keypad 5 corresponding to the graphical element library. The modification operation may be further executed by the controller 1 or processing unit, respectively, and may involve a retrieving of an illustrating graphical element from the graphical element library. The compound graphic may be composed again comprising formerly displayed unmodified illustrating graphical elements and the modified illustrating graphical element. According to an embodiment of the method for generating a compound graphic the modification operation may be a replacement operation wherein a displayed illustrating graphical element may be replaced against a retrieved illustrating graphical element. Further, the modification operation may also be an adding operation, wherein a up to the moment non-displayed illustrating graphical element may be included in the compound graphic and displayed accordingly. Moreover, the modification operation may also be a removing operation, wherein a displayed illustrating graphical element may be removed from the compound graphic such that the newly display compound graphics may be composed of the remaining illustrating graphical elements.

The depicted compound graphic C2 in Fig. 8b may be composed of illustrating graphical elements of a graphical element library which may comprise the illustrating graphical elements shown in Fig. 4a to Fig. 4e. With respect to Fig. 4a - Fig. 4e, the illustrating graphical elements may be referenced may the reference numerals E0.1, E1.4, E2.3, E3.2, and E4.5.

Possible assignments of modification operations to keys of a keypad is described in detail above and may be employed for the mobile phone according to Fig. 8a and Fig. 8b.

The storing of the graphical library in a re-configurable storage, like RAM 6a or a flashable ROM 6b may offer the opportunity to upload parts of the graphical element library from an external graphical element library source to the mobile phone for generating compound graphics. Graphical element libraries according to different graphical subjects may be provided by service providers. The possibility to communicate via a mobile communication network may be employed for uploading the provided graphical element library into the mobile phone offering the user of the mobile phone to compose different compound graphics of different graphical subjects. The transmission of a graphical element library to the mobile phone may be also possible using other kind of data communication means, like wire based communication to a computer via a dedicated communication interface.

The resulting compound graphic may be stored in a further graphic library, e.g. a clip art library, for further usage. The compound graphic may be included in or appended to a text message and communicated between mobile phones via a mobile communication network.

While the present invention has been described in connection with the preferred embodiments thereof, it will be readily recognised by those skilled in the art that those embodiments are for exemplary purposes, the scope of the invention being defined by the appended claims only.

## Claims

1. Method of generating a compound graphic (C1, C2, 10-18) comprising a plurality of illustrating graphical elements(E1-E5, E0.x-E4.x) stored in a graphical element library (L1), comprising
- displaying (S101) a compound graphic (C1, C2, 10-18) comprising selected illustrating graphical elements (E1-E5, E0.x-E4.x);
- receiving (S103) a modification request from a user selecting a single one of certain keys of a keypad, each key initiating a corresponding modification request, which also comprises a designation of a key-specific illustrating graphical element (E1-E5, E0.x-E4.x) of said displayed compound graphic (C1, C2, 10-18);
- modifying (S104) said designated illustrating graphical element (E1-E5, E0.x-E4.x) in accordance with said modification request; and
- displaying (S105) a modified compound graphic (C1, C2, 10-18) including said modified illustrating graphical element, such that user-selection of a single key of said certain keys results in modification of the corresponding key-specific illustrating graphical element within said compound graphic.

2. Method according to claim 1, wherein said compound graphic (C1, C2, 10-18) is representative of a comprehensive graphical subject and said graphical element library (L1) comprises illustrating graphical elements of graphical sub-subjects (T1-T4) of said comprehensive graphical subject.

3. Method according to claim 2, wherein each graphical sub-subject of said graphical sub-subjects has assigned one key of said keypad for initiating modification requests relating to said graphical elements comprised by said one graphical sub-subject, to which said one key is assigned.

4. Method according to anyone of the preceding claims 1 to 3, wherein selecting one of said certain keys further comprises:
- toggling between illustrating graphical elements of a selection of illustrating graphical elements (E0.x-E4.x), said selection of illustrating graphical elements being said illustrating graphical elements of one graphical sub-subject.

5. Method according to claim 4, wherein said compound graphic comprises (C1, C2, 10-18) at the most one illustrating graphical element of one graphical sub-subject.

6. Method according to anyone of the preceding claims 1 to 5, wherein said compound graphic is divided vertically or horizontally into three sections, which are correspondingly mapped by an assignment table onto said keys of said keypad.

7. Method according to anyone of the preceding claims 1 to 6, wherein at least one illustrating graphical element (E1-E5, E0.x-E4.x) is an animated illustrating graphical element.

8. Method according to anyone of the preceding claims 1 to 7, wherein said modifying said illustrating graphical element further comprises:
- retrieving an illustrating graphical element (E1-E5, E0.x-E4.x) from said graphical element library (L1).

9. Method according to anyone of the preceding claims 1 to 8, further comprising:
- storing said compound graphic (C1, C2, 10-18).

10. Method according to anyone of the preceding claims 1 to 9, further comprising:
- including said compound graphic (C1, C2, 10-18) into a text message.

11. Method according to anyone of the preceding claims 1 to 10, further comprising:
- offering a menu for selecting a modification request.

12. Method according to anyone of the preceding claims 1 to 11, wherein the operative steps are performed by a mobile terminal (100).

13. Computer program for generating a compound graphic, said computer program comprising program code portions for carrying out the method of anyone of claim 1 to 12, when said computer program is executed on a computer, a processing device or a mobile terminal.

14. Mobile terminal for generating a compound graphic (C1, C2, 10-18) comprising a plurality of illustrating graphical elements (E1-E5, E0.x-E4.x) stored in a graphical element library (L1), comprising
- storing means (M1, 6a) for storing said graphical element library (L1);
- pre-selecting means (M0) for pre-selecting illustrating graphical elements;
- displaying means (M3a, 4a) for displaying a compound graphic (C1, C2, 10-18) comprising illustrating graphical elements (E1-E5, E0.x-E4.x);
- inputting means (M4, 5) comprising certain keys, each certain key initiating a corresponding modification request (M5), which also comprises a designation of a corresponding key-specific illustrating graphical element (E1-E5, E0.x-E4.x) of said displayed compound graphic (C1, C2, 10-18); and
- modifying means (M2, 1) for modifying said designated illustrating graphical element (E1-E5, E0.x-E4.x) in accordance with said modification request (M5), such that user-selection of a single key of said certain keys results in modification of the corresponding key-specific illustrating graphical element within said compound graphic.

15. Mobile terminal according to claims 14, wherein said compound graphic (C1, C2, 10-18) is representative of a comprehensive graphical subject and said graphical element library (L1) comprises illustrating graphical elements of graphical sub-subjects (T1-T4) of said comprehensive graphical subject.

16. Mobile terminal according to claim 15, wherein each one of said certain keys of said inputting means (M4, 5) is assigned to one graphical sub-subject (T1-T4) of said graphical sub-subjects for initiating modification requests relating to said graphical elements comprised by said one graphical sub-subject to which said one key is assigned.

17. Mobile terminal according to claim 15 or claim 16, wherein modification request comprises said designation of said corresponding illustrating graphical element in that it is toggled between illustrating graphical elements (E0.x-E4.x) of a certain selection of a plurality of illustrating graphical elements, said selection of illustrating graphical elements (E1.x-E4.x) being said illustrating graphical elements of one graphical sub-subject (T1-T4).

18. Mobile terminal according to anyone of the preceding claims 15 to 17, wherein said compound graphic (C1, C2, 10-18) comprises at the most one illustrating graphical element (E1-E5, E0.x-E4.x) of one graphical sub-subject.

19. Mobile terminal according to anyone of the preceding claims 14 to 18, wherein said compound graphic is divided vertically or horizontally into three sections, which are correspondingly mapped by an assignment table onto said keys of said keypad.

20. Mobile terminal according to anyone of the preceding claims 14 to 19, wherein said modifying means (M2) for modifying said illustrating graphical element (E1-E5, E0.x-E4.x) further comprises:
- retrieving means (M6) for retrieving an illustrating graphical element (E1-E5, E0.x-E4.x) from said graphical element library (L1).

21. Mobile terminal according to anyone of the preceding claims 14 to 20, wherein at least one illustrating graphical element (E1-E5, E0.x-E4.x) is an animated illustrating graphical element.

22. Mobile terminal according to anyone of the preceding claims 14 to 21, further comprising:
- storing means (6a) for storing said compound graphic (C1, C2, 10-18).

23. Mobile terminal according to anyone of the preceding claims 14 to 22, further comprising:
- integrating means for including said compound graphic (C1, C2, 10-18) into a text message.

24. Mobile terminal according to anyone of the preceding claims 14 to 23, further comprising:
- means for offering a menu for selecting a modification request (M5).

25. Mobile terminal according to anyone of the preceding claims 14 to 24, wherein said mobile communication terminal provides means for exchanging the graphical element library (L I).

26. Mobile terminal according to anyone of the preceding claims 14 to 25, wherein said mobile communication terminal provides means for exchanging parts of the graphical element library (L1).

27. Mobile terminal according to anyone of the preceding claim 14 to 26, wherein said mobile terminal is a mobile communication terminal (100) able to communicate via a mobile communication network.

## Patentansprüche

1. Verfahren zur Erzeugung einer Verbundgrafik (C1, C2, 10-18), die eine Vielzahl illustrierender grafischer Elemente (E1-E5, E0.x-E4.x) aufweist, die in einer Bibliothek der grafischen Elemente (L1) gespeichert sind, aufweisend
- Anzeigen (S101) einer Verbundgrafik (C1, C2, 10-18), die ausgewählte illustrierende grafische Elemente (E1-E5, E0.x-E4.x) aufweist;
- Empfangen (S103) einer Modifikationsanfrage von einem Benutzer beim Auswählen einer einzelnen bestimmten Taste einer Tastatur, wobei jede Taste eine entsprechende Modifikationsanfrage einleitet, welche auch eine Angabe eines tastenspezifischen illustrierenden grafischen Elementes (E1-E5, E0.x-E4.x) der angezeigten Verbundgrafik (C1, C2, 10-18) aufweist;
- Ändern (S 104) des angegebenen illustrierenden grafischen Elementes (E1-E5, E0.x-E4.x) entsprechend der Änderungsanfrage; und
- Anzeigen (S105) einer geänderten Verbundgrafik (C1, C2, 10-18) einschließlich des geänderten illustrierenden grafischen Elementes, so dass die Benutzerwahl einer einzelnen Taste der bestimmten Tasten zur Änderung des entsprechenden tastenspezifischen illustrierenden grafischen Elementes in der Verbundgrafik führt.

2. Verfahren gemäß dem Anspruch 1, wobei die Verbundgrafik (C1, C2, 10-18) ein Repräsentant eines umfassenden grafischen Subjektes ist und die Bibliothek der grafischen Elemente (L1) illustrierende grafische Elemente der grafischen Untersubjekte (T1-T4) der umfassenden grafischen Subjekte aufweist.

3. Verfahren gemäß dem Anspruch 2, wobei jedes grafische Untersubjekt der grafischen Untersubjekte eine Taste der Tastatur zum Ausführen von Modifikationsanfragen betreffend die grafischen Elemente zuordnet, die ein grafisches Untersubjekt aufweisen, dem die eine Taste zugeordnet ist.

4. Verfahren gemäß einem der vorangehenden Ansprüche 1 bis 3, wobei das Auswählen einer der bestimmten Tasten weiter aufweist:
- Umschalten zwischen illustrierenden graphischen Elementen einer Auswahl illustrierender graphischer Elemente (E0.x-E4.x), wobei die Auswahl illustrierender graphischer Elemente die illustrierende graphische Elemente eines grafischen Untersubjektes ist.

5. Verfahren gemäß dem Anspruch 4, wobei die Verbundgrafik (C1, C2, 10-18) höchstens ein illustrierendes grafisches Element eines grafischen Untersubjektes aufweist.

6. Verfahren gemäß einem der vorangehenden Ansprüche 1 bis 5, wobei die Verbundgrafik vertikal und horizontal in drei Abschnitte geteilt ist, die entsprechend durch eine Zuordnungstabelle auf die Tasten der Tastatur abgebildet sind.

7. Verfahren gemäß einem der vorangehenden Ansprüche 1 bis 6, wobei mindestens ein illustrierendes grafisches Element (E1-E5, E0.x-E4.x) ein animiertes illustrierendes grafisches Element ist.

8. Verfahren gemäß einem der vorangehenden Ansprüche 1 bis 7, wobei das Modifizieren des illustrierenden grafischen Elementes weiter aufweist:
- Abfragen eines illustrierenden grafischen Elementes (E1-E5, E0.x-E4.x) von der Bibliothek der grafischen Elemente (L1).

9. Verfahren gemäß einem der vorangehenden Ansprüche 1 bis 8, weiter aufweisend:
- Speichern der Verbundgrafik (C1, C2, 10-18).

10. Verfahren gemäß einem der vorangehenden Ansprüche 1 bis 9, weiter aufweisend:
- Einfügen der Verbundgrafik (C1, C2, 10-18) in eine Textnachricht.

11. Verfahren gemäß einem der vorangehenden Ansprüche 1 bis 10, weiter aufweisend:
- Anbieten eines Menüs zum Auswählen einer Modifizierungsanfrage.

12. Verfahren gemäß einem der vorangehenden Ansprüche 1 bis 10, wobei die Ablaufschritte durch ein mobiles Endgerät (100) ausgeführt werden.

13. Computerprogramm zur Erzeugung einer Verbundgrafik, wobei das Computerprogramm Teile eines Programmkodes zum Ausführen des Verfahrens eines der Ansprüche 1 bis 12 aufweist, wenn das Computerprogramm auf einem Computer, einem Verarbeitungsgerät oder einem mobilen Endgerät ausgeführt wird.

14. Mobiles Endgerät zur Erzeugung einer Verbundgrafik (C1, C2, 10-18), die eine Vielzahl illustrierender grafischer Elemente (E1-E5, E0.x-E4.x) aufweist, die in einer Bibliothek der graphischen Elemente (L1) gespeichert sind, aufweisend
- Speichermittel (M1, 6a) zum Speichern der Bibliothek der grafischen Elemente (L1);
- Vorauswahlmittel (M0) zum Vorauswählen illustrierender graphischer Elemente;
- Anzeigemittel (M3a, 4a) zum Anzeigen einer Verbundgrafik (C1, C2, 10-18), die illustrierende grafische Elemente (E1-E5, E0.x-E4.x) aufweist;
- Eingabemittel (M4, 5), die bestimmte Tasten aufweisen, wobei jede bestimmte Taste eine entsprechende Modifikationsanfrage (M5) einleitet, welche auch eine Angabe eines entsprechenden tastenspezifischen illustrierenden grafischen Elementes (E1-E5, E0.x-E4.x) der angezeigten Verbundgrafik (C1, C2, 10-18) aufweist; und
- Änderungsmittel (M2, 1) zum Ändern des angegebenen illustrierenden grafischen Elementes (E1-E5, E0.x-E4.x) entsprechend der Modifikationsanfrage (M5), so dass die Benutzerwahl einer einzelnen Taste der bestimmten Tasten zur Änderung des entsprechenden tastenspezifischen illustrierenden grafischen Elementes in der Verbundgrafik führt.

15. Mobiles Endgerät gemäß dem Anspruch 14, wobei die Verbundgrafik (C1, C2, 10-18) ein Repräsentant eines umfassenden grafischen Subjektes ist und die Bibliothek der grafischen Elemente (L1) illustrierende grafische Elemente grafischer Untersubjekte (T1-T4) des umfassenden grafischen Subjektes aufweist.

16. Mobiles Endgerät gemäß dem Anspruch 15, wobei jede einzelne der bestimmten Tasten der Eingabemittel (M4, 5) einem grafischen Untersubjekt (T1-T4) der grafischen Untersubjekte zugeordnet ist, zum Ausführen von Modifikationsanfragen bezüglich der grafischen Elemente, die ein grafisches Untersubjekt aufweisen, dem die eine Taste zugeordnet ist.

17. Mobiles Endgerät gemäß dem Anspruch 15 oder dem Anspruch 16, wobei (die) Modifikationsanfrage die Angabe des entsprechenden illustrierenden grafischen Elementes aufweist, in welchem es zwischen illustrierenden grafischen Elementen (E0.x-E4.x) einer bestimmten Auswahl einer Vielzahl illustrierender grafischer Elemente geschaltet ist, wobei die Auswahl illustrierender graphischer Elemente (E1.x-E4.x) die illustrierenden graphischen Elemente eines grafischen Untersubjektes (T1-T4) ist.

18. Mobiles Endgerät gemäß einem der vorangehenden Ansprüche 15 bis 17, wobei die Verbundgrafik (C1, C2, 10-18) höchstens ein illustrierendes grafisches Element (E1-E5, E0.x-E4.x) eines grafischen Untersubjektes aufweist.

19. Mobiles Endgerät gemäß einem der vorangehenden Ansprüche 14 bis 18, wobei die Verbundgrafik vertikal und horizontal in drei Abschnitte geteilt ist, die entsprechend durch eine Zuordnungstabelle auf die Tasten der Tastatur abgebildet sind.

20. Mobiles Endgerät gemäß einem der vorangehenden Ansprüche 14 bis 19, wobei die Änderungsmittel (M2) zum Ändern des illustrierenden grafischen Elementes (E1-E5, E0.x-E4.x) weiter aufweisen:
- Abfragemittel (M6) zum Abfragen eines illustrierenden grafischen Elementes (E1-E5, E0.x-E4.x) von der Bibliothek der grafischen Elemente (L1).

21. Mobiles Endgerät gemäß einem der vorangehenden Ansprüche 14 bis 20, wobei mindestens ein illustrierendes grafisches Element (E1-E5, E0.x-E4.x) ein animiertes illustrierendes grafisches Element ist.

22. Mobiles Endgerät gemäß einem der vorangehenden Ansprüche 14 bis 21, weiter aufweisend:
- Speichermittel (6a) zum Speichern der Verbundgrafik (C1, C2, 10-18).

23. Mobiles Endgerät gemäß einem der vorangehenden Ansprüche 14 bis 22, weiter aufweisend:
- Einbaumittel zum Einfügen der Verbundgrafik (C1, C2, 10-18) in eine Textnachricht.

24. Mobiles Endgerät gemäß einem der vorangehenden Ansprüche 14 bis 23, weiter aufweisend:
- Mittel zum Anbieten eines Menüs zum Auswählen einer Modifizierungsanfrage (M5).

25. Mobiles Endgerät gemäß einem der vorangehenden Ansprüche 14 bis 24, wobei das mobile Kommunikations-Endgerät Mittel zum Austauschen der Bibliothek der grafischen Elemente (L1) anbietet.

26. Mobiles Endgerät gemäß einem der vorangehenden Ansprüche 14 bis 25, wobei das mobile Kommunikations-Endgerät Mittel zum Austauschen von Teilen der Bibliothek der grafischen Elemente (L1) anbietet.

27. Mobiles Endgerät gemäß einem der vorangehenden Ansprüche 14 bis 26, wobei das mobile Endgerät ein mobiles Kommunikations-Endgerät (100) ist, das zur Datenübertragung über ein mobiles Kommunikations-Netzwerk fähig ist.

## Revendications

1. Procédé de génération d'un graphique composé (C1, C2, 10-18) comprenant une pluralité d'éléments graphiques d'illustration (E1-E5, E0.x-E4.x) stockés dans une bibliothèque d'éléments graphiques (L1), comprenant les étapes consistant à :
- afficher (S101) un graphique composé (C1, C2, 10-18) comprenant des éléments graphiques d'illustration sélectionnés (E1-E5, E0.x-E4.x) ;
- recevoir (S103) une demande de modification à partir d'un utilisateur sélectionnant une touche unique parmi certaines touches d'un clavier, chaque touche lançant une demande de modification correspondante, qui comprend également une désignation d'un élément graphique d'illustration à touche spécifique (E1-E5, E0.x-E4.x) dudit graphique composé affiché (C1, C2, 10-18) ;
- modifier (S104) ledit élément graphique d'illustration désigné (E1-E5, E0.x-E4.x) conformément à ladite demande de modification ; et
- afficher (S105) un graphique composé modifié (C1, C2, 10-18) comprenant ledit élément graphique d'illustration désigné, de sorte qu'une sélection par utilisateur d'une touche unique desdites certaines touches entraîne une modification de l'élément graphique d'illustration à touche spécifique correspondant au sein du graphique composé.

2. Procédé selon la revendication 1, dans lequel ledit graphique composé (C1, C2, 10-18) est représentatif d'un sujet graphique compréhensif et ladite bibliothèque d'éléments graphiques (L1) comprend des éléments graphiques d'illustration de sous-sujets graphiques (T1-T4) dudit sujet graphique compréhensif.

3. Procédé selon la revendication 2, dans lequel chaque sous-sujet graphique desdits sous-sujets graphiques a attribué une touche dudit clavier pour lancer des demandes de modification concernant lesdits éléments graphiques compris par ledit sous-sujet graphique, auquel ladite touche est attribuée.

4. Procédé selon l'une quelconque des revendications précédentes 1 à 3, dans lequel la sélection d'une desdites certaines touches comprend l'étape consistant à :
- basculer entre des éléments graphiques d'illustration d'une sélection d'éléments graphiques d'illustration (E0.x-E4.x), ladite sélection d'éléments graphiques d'illustration étant lesdits éléments graphiques d'illustration d'un sous-sujet graphique.

5. Procédé selon la revendication 4, dans lequel ledit graphique composé (C1, C2, 10-18) comprend au plus un élément graphique d'illustration d'un sous-sujet graphique.

6. Procédé selon l'une quelconque des revendications précédentes 1 à 5, dans lequel ledit graphique composé est divisé verticalement ou horizontalement en trois sections qui sont mappées de façon correspondante par une table d'attribution sur lesdites touches dudit clavier.

7. Procédé selon l'une quelconque des revendications précédentes 1 à 6, dans lequel au moins un élément graphique d'illustration (E1-E5, E0.x-E4.x) est un élément graphique d'illustration animé.

8. Procédé selon l'une quelconque des revendications précédentes 1 à 7, dans lequel ladite modification dudit élément graphique d'illustration comprend en outre l'étape consistant à :
- récupérer un élément graphique d'illustration (E1-E5, E0.x-E4.x) à partir de ladite bibliothèque d'éléments graphiques (L1).

9. Procédé selon l'une quelconque des revendications précédentes 1 à 8, comprenant en outre l'étape consistant à :
- stocker ledit graphique composé (C1, C2, 10-18).

10. Procédé selon l'une quelconque des revendications précédentes 1 à 9, comprenant en outre l'étape consistant à :
- inclure ledit graphique composé (C1, C2, 10-18) dans un message textuel.

11. Procédé selon l'une quelconque des revendications précédentes 1 à 10, comprenant en outre l'étape consistant à :
- offrir un menu pour sélectionner une demande de modification.

12. Procédé selon l'une quelconque des revendications précédentes 1 à 11, dans lequel les étapes de fonctionnement sont exécutées par un terminal mobile (100).

13. Programme informatique pour générer un graphique composé, ledit programme informatique comprenant des parties de code de programme pour réaliser le procédé selon l'une quelconque des revendications 1 à 12, lorsque ledit programme informatique est exécuté sur un ordinateur, un dispositif de traitement ou un terminal mobile.

14. Terminal mobile pour générer un graphique composé (C1, C2, 10-18) comprenant une pluralité d'éléments graphiques d'illustration (E1-E5, E0.x-E4.x) stockés dans une bibliothèque d'éléments graphiques (L1), comprenant :
- des moyens de stockage (M1, 6a) destinés à stocker ladite bibliothèque d'éléments graphiques (L1) ;
- des moyens de présélection (M0) destinés à présélectionner des éléments graphiques d' illustration ;
- des moyens d'affichage (M3a, 4a) destinés à afficher un graphique composé (C1, C2, 10-18) comprenant des éléments graphiques d'illustration (E1-E5, E0.x-E4.x) ;
- des moyens d'entrée (M4, 5) comprenant certaines touches, chaque certaine touche lançant une demande de modification correspondante (M5), qui comprend également une désignation d'un élément graphique d'illustration à touche spécifique (E1-E5, E0.x-E4.x) dudit graphique composé affiché (C1, C2, 10-18) ; et
- des moyens de modification (M2, 1) destinés à modifier ledit élément graphique d'illustration désigné (E1-E5, E0.x-E4.x) conformément à ladite demande de modification (M5), de sorte qu'une sélection par utilisateur d'une touche unique desdites certaines touches entraîne une modification de l'élément graphique d'illustration à touche spécifique correspondant au sein du graphique composé.

15. Terminal mobile selon la revendication 14, dans lequel ledit graphique composé (C1, C2, 10-18) est représentatif d'un sujet graphique compréhensif et ladite bibliothèque d'éléments graphiques (L1) comprend des éléments graphiques d'illustration de sous-sujets graphiques (T1-T4) dudit sujet graphique compréhensif.

16. Terminal mobile selon la revendication 15, dans lequel chacune desdites certaines touches desdits moyens d'entrée (M4, 5) est attribuée à un sous-sujet graphique (T1-T4) desdits sous-sujets graphiques pour lancer des demandes de modification concernant lesdits éléments graphiques compris par ledit sous-sujet graphique auquel ladite touche est attribuée.

17. Terminal mobile selon la revendication 15 ou la revendication 16, dans lequel une demande de modification comprend ladite désignation dudit élément graphique d'illustration correspondant en ce qu'elle est basculée entre des éléments graphiques d'illustration (E0.x-E4.x) d'une certaine sélection d'une pluralité d'éléments graphiques d'illustration, ladite sélection d'éléments graphiques d'illustration (E1.x-E4.x) étant lesdits éléments graphiques d'illustration d'un sous-sujet graphique (T1-T4).

18. Terminal mobile selon l'une quelconque des revendications précédentes 15 à 17, dans lequel ledit graphique composé (C1, C2, 10-18) comprend au plus un élément graphique d'illustration (E1-E5, E0.x-E4.x) d'un sous-sujet graphique.

19. Terminal mobile selon l'une quelconque des revendications précédentes 14 à 18, dans lequel ledit graphique composé est divisé verticalement ou horizontalement en trois sections qui sont mappées de façon correspondante par une table d'attribution sur lesdites touches dudit clavier.

20. Terminal mobile selon l'une quelconque des revendications précédentes 14 à 19, dans lequel lesdits moyens d'identification (M2) destinés à modifier ledit élément graphique d'illustration (E1-E5, E0.x-E4.x) comprennent en outre :
- des moyens de récupération (M6) destinés à récupérer un élément graphique d'illustration (E1-E5, E0.x-E4.x) à partir de ladite bibliothèque d'éléments graphiques (L1).

21. Terminal mobile selon l'une quelconque des revendications précédentes 14 à 20, dans lequel au moins un élément graphique d'illustration (E1-E5, E0.x-E4.x) est un élément graphique d'illustration animé.

22. Terminal mobile selon l'une quelconque des revendications précédentes 14 à 21, comprenant en outre :
- des moyens de stockage (6a) destinés à stocker ledit graphique composé (C1, C2, 10-18).

23. Terminal mobile selon l'une quelconque des revendications précédentes 14 à 22, comprenant en outre :
- des moyens d'intégration pour inclure ledit graphique composé (C1, C2, 10-18) dans un message textuel.

24. Terminal mobile selon l'une quelconque des revendications précédentes 14 à 23, comprenant en outre :
- des moyens destinés à offrir un menu pour sélectionner une demande de modification (M5).

25. Terminal mobile selon l'une quelconque des revendications précédentes 14 à 24, dans lequel ledit terminal de communication mobile fournit des moyens destinés à échanger la bibliothèque d'éléments graphiques (L1).

26. Terminal mobile selon l'une quelconque des revendications précédentes 14 à 25, dans lequel ledit terminal de communication mobile fournit des moyens destinés à échanger des parties de la bibliothèque d'éléments graphiques (L1).

27. Terminal mobile selon l'une quelconque des revendications précédentes 14 à 26, dans lequel ledit terminal mobile est un terminal de communication mobile (100) capable de communiquer par l'intermédiaire d'un réseau de communication mobile.
